# EUROPÄISCHE PATENTSCHRIFT

(11) **EP 3 111 100 B1**
(45) Veröffentlichungstag und Bekanntmachung des Hinweises auf die Patenterteilung: **10.04.2019**
(21) Anmeldenummer: 15702758.2
(22) Anmeldetag: 04.02.2015
(51) Int. Cl.: F16B 25/00, F16B 41/00, F16B 11/00

(54) **VERFAHREN ZUM HERSTELLEN EINER SCHRAUB-KLEBVERBINDUNG UNTER VERWENDUNG EINER FLIESSLOCHFORMENDEN SCHRAUBE, SOWIE HIERFÜR VERWENDBARE FLIESSLOCHFORMENDE SCHRAUBE**
METHOD FOR PRODUCING AN ADHESIVE SCREW CONNECTION USING A FLOW DRILL SCREW, AND FLOW DRILL SCREW USABLE THEREFOR
PROCÉDÉ DE PRODUCTION D'UNE LIAISON PAR VISSAGE-COLLAGE À L'AIDE D'UNE VIS DE FORMATION DE TROU D'ÉCOULEMENT ET VIS DE FORMATION DE TROU D'ÉCOULEMENT UTILISABLE À CETTE FIN

(30) Priorität: 24.02.2014 DE 102014203274
(43) Veröffentlichungstag der Anmeldung: 04.01.2017
(73) Patentinhaber: Bayerische Motoren Werke Aktiengesellschaft, 80809 München (DE)
(72) Erfinder: KULZER, Norbert, 94522 Wallersdorf (DE)
(86) Internationale Anmeldenummer: PCT/EP2015/052271
(87) Internationale Veröffentlichungsnummer: WO 2015/124425

(56) Entgegenhaltungen:
- EP-A2- 2 423 518
- WO-A1-98/23873
- DE-A1-102004 025 492
- DE-A1-102012 210 791
- DE-C1- 3 909 725
- US-A- 5 094 579
- US-A1- 2009 123 691
- US-A1- 2012 213 611

## Beschreibung

Die Erfindung betrifft ein Verfahren zum Herstellen einer Schraub-Klebverbindung zwischen wenigstens einem oberen Bauteil und wenigstens einem unteren Bauteil unter Verwendung einer fließlochformenden Schraube.

Die Erfindung betrifft ferner eine hierfür verwendbare fließlochformende Schraube.

Das Herstellen einer Schraub-Klebverbindung zwischen Bauteilen durch Verkleben und fließlochformendes Verschrauben ist aus dem Stand der Technik hinreichend bekannt. Diesbezüglich wird bspw. auf die DE 103 48 427 A1 hingewiesen. Der Vorgang des spanlosen Fließloch- und Gewindeformens sowie eine geeignete loch- und gewindeformende bzw. fließlochformende Schraube sind anschaulich in der DE 39 09 725 C1 dargestellt.

Das obere Bauteil kann, insbesondere wenn dieses eine zum Fließlochformen ungeeignete Materialdicke und/oder -härte aufweist oder aus einem zum Fließlochformen ungeeigneten Material (bspw. FVK) gebildet ist, eine Vorlochung aufweisen, wie in der DE 10 2012 210 791 A1 gezeigt. Während des Einschraubvorgangs trifft die Schraubenspitze und im weiteren auch der selbstformende Gewindeabschnitt der fließlochformenden Schraube auf die zuvor aufgebrachte Klebstoffschicht, wodurch der Klebstoff aufgewirbelt und aus dem Vorloch heraus geschleudert wird. Dies führt zu einer Verschmutzung der Einschraubvorrichtung und/oder der Bauteile. Ferner kann der aus dem Vorloch austretende Klebstoff die Drehmomentregelung der Einschraubvorrichtung beeinträchtigen. Bislang wird daher die Füge- bzw. Einschraubstelle von einem Klebstoffauftrag ausgespart. Der klebstofffreie Abschnitt macht jedoch den Klebstoffauftrag aufwändiger und führt zu einer unterbrochenen Klebenaht oder Klebefläche.

Zum Stand der Technik wird ferner auf die US 5,094,579 A hingewiesen, die eine Verbindungselementanordnung mit einem Bolzen und einer nachgiebigen Tülle zum Verbinden von mit Öffnungen versehenen Werkstücken beschreibt.

Der Erfindung liegt die Aufgabe zugrunde ein Verfahren zum Herstellen einer Schraub-Klebverbindung zwischen wenigstens einem vorgelochten oberen Bauteil und wenigstens einem unteren Bauteil unter Verwendung einer fließlochformenden Schraube anzugeben, das wenigstens einen mit dem Stand der Technik einhergehenden Nachteil nicht oder zumindest nur in einem verminderten Umfang aufweist.

Diese Aufgabe wird gelöst durch ein erfindungsgemäßes Verfahren mit den Merkmalen des Anspruchs 1. Mit dem nebengeordneten Anspruch 7 erstreckt sich die Lösung der Aufgabe auch auf eine hierfür verwendbare fließlochformende Schraube. Vorteilhafte und bevorzugte Weiterbildungen und Ausgestaltungen ergeben sich analog für beide Erfindungsgegenstände sowohl aus den abhängigen Ansprüchen als auch aus den nachfolgenden Erläuterungen.

Das erfindungsgemäße Verfahren zum Herstellen einer Schraub-Klebverbindung zwischen wenigstens einem vorgelochten oberen Bauteil und wenigstens einem unteren Bauteil unter Verwendung einer fließlochformenden Schraube, wobei die Schraube an der Fügestelle das obere Bauteil durch ein Vorloch durchdringt und mit dem unteren Bauteil unter Ausbildung eines Fließlochs verschraubt wird, sieht vor, dass im Vorloch des oberen Bauteils wenigstens ein Schutzring bzw. eine Schutzhülse platziert wird, durch die der Schraubenschaft beim Einschraubvorgang hindurch geschraubt wird.

Bevorzugt wird das erfindungsgemäße Verfahren automatisiert ausgeführt. Es können mehrere obere, vorgelochte Bauteile und/oder mehrere untere Bauteile vorgesehen sein. Die Bauteile sind an ihren einander zugewandten Flächen miteinander verklebt. Der Klebstoff kann flächig oder entlang wenigstens einer Bahn (zur Erzeugung einer Klebenaht) aufgebracht sein.

Eine fließlochformende Schraube, d. h. eine zum spanlosen Fließloch- und Gewindeformen geeignete Schraube, weist einen Schraubenschaft mit einem von der Schaft- bzw. Schraubenspitze ausgehenden Lochformungsabschnitt und einem sich in Richtung des Schraubenkopfs anschließenden selbstformenden Gewindeabschnitt auf.

Der Schutzring weist eine kürzere axiale Länge als der Schraubenschaft auf und kann sich in axialer Richtung relativ zum Schraubenschaft bewegen (d. h. eine axiale Beweglichkeit zwischen dem Schutzring und dem Schraubenschaft der fließlochformenden Schraube ist vorgesehen). Bevorzugt ist der Schutzring bezüglich des Durchmessers des Vorlochs im oberen Bauteil mit einem kleinern Außendurchmesser ausgebildet, so dass dieser ohne Pressen in das Vorloch einführbar bzw. einsteckbar ist. Nach dem Einschraubvorgang verbleibt der Schutzring im Vorloch.

Beim Einschrauben stützt sich der Schutzring innerhalb des Vorlochs im oberen Bauteil gegen das untere Bauteil ab, wodurch die axiale Relativbewegung zwischen dem Schraubenschaft und dem Schutzring ermöglicht wird, derart, dass sich der ortsfeste Schutzring und der Schraubenkopf der einschraubenden Schraube während des Einschraubvorgangs annähern. Der Einschraubvorgang hat zwei Phasen (Fließlochformung und Gewindeformung mit gleichzeitigem Gewindeeingriff).

Der Schutzring dient einerseits dazu, einen Klebstoffaustritt während des Einschraubvorgangs zu verhindern. Insbesondere wird ein Hochziehen des Klebstoffs durch das selbstformende Gewinde der Schraube verhindert. Die Bauteile und die Einschraubvorrichtung (einschließlich der verwendeten Spannwerkzeuge) werden somit nicht durch austretenden Klebstoff verunreinigt. Der Klebstoffauftrag kann durchgängig bzw. vollflächig erfolgen, wodurch das Auftragen, insbesondere das automatisierte Auftragen, vereinfacht wird und sich auch Vorteile hinsichtlich der erzielten Verbindungsfestigkeit und des Korrosionsverhaltens an der Fügestelle ergeben. Ferner bleibt die Drehmomentregelung, sofern vorgesehen, stabil. Andererseits kann der Schutzring aber auch der Zentrierung und Führung des Schraubenschafts innerhalb des Vorlochs beim Einschraubvorgang dienen und eine Berührung zwischen dem rotierenden Schraubenschaft und der Innenwandung des Vorlochs verhindern (d. h. ein so genanntes Fressen zwischen dem Schraubenschaft und der Vorlochwandung wird unterbunden). Durch den im Vorloch verbleibenden Schutzring kann ferner eine verbesserte Korrosionsbeständigkeit erzielt werden. Insbesondere kann eine Kontaktkorrosion (bspw. durch freiliegende CFK-Fasern des oberen Bauteils) vermieden werden. Dies ist keine abschließende Aufzählung von Vorteilen, die mit der Erfindung einhergehen.

Der Schutzring kann am Schraubenschaft befestigt und zusammen mit diesem in das Vorloch im oberen Bauteil eingesteckt werden. Dies führt zu einer Vereinfachung des Verfahrensablaufs und zu einer besseren Automatisierbarkeit.

Bevorzugt ist vorgesehen, dass die axiale Länge des Schutzrings höchstens der Dicke des oberen Bauteils entspricht. D. h. die axiale Länge des Schutzrings übersteigt nicht die Dicke des oberen Bauteils. Der Schutzring hat dadurch in axialer Richtung ausreichenden Platz im Vorloch, wodurch auch der Einschraubvorgang nicht beeinträchtigt wird.

Ebenso kann vorgesehen sein, dass der Schutzring verformbar und in axialer Richtung bezüglich der Dicke des oberen Bauteils mit Überlänge ausgebildet ist, wodurch dieser während des Einschraubvorgangs zwischen dem unteren Bauteil und dem Schraubenkopf gestaucht wird. Der Schutzring wird beim Stauchen, insbesondere plastisch, verformt, wozu dieser aus einem verformbaren Material wie bspw. Kunststoff (einschließlich Kunststoffverbundmaterialien) oder Metall (bspw. einem weichen Aluminiumwerkstoff) gebildet ist. Die Ringwandung kann strukturelle Schwächungsmerkmale aufweisen, die ein gezieltes und/oder vereinfachtes Stauchen und damit ein verbessertes Fließens des Ringwerkstoffs ermöglichen. Solche Schwächungsmerkmale können bspw. Einprägungen oder Schlitze in der Ringwandung sein. Aufgrund der Stauchung kann innerhalb des Vorlochs im oberen Bauteil eine Lochleibungspressung herbeigeführt werden, die, insbesondere bis zum Aushärten des Klebstoffs, ein Verrutschen der Bauteile an der Fügestelle verhindert. Ferner kann durch die Ringstauchung die Abdichtung des Vorlochs verbessert werden, wodurch auch ein Ausgasen, bspw. im KTL-Prozess (mit der Gefahr einer Bläschen-Bildung) zuverlässig verhindert wird.

Ebenso kann vorgesehen sein, dass der Schutzring steif und in axialer Richtung bezüglich der Dicke des oberen Bauteils mit Überlänge ausgebildet ist, wodurch sich beim Einschraubvorgang ein definierter Spalt zwischen den Bauteilen einstellt bzw. ausbildet. Dieser definierte Spalt dient bspw. als Klebstoffspalt. Dadurch kann an der Füge- bzw. Schraubstelle ein Verdrängen von Klebstoff und/oder eine direkte Berührung der Bauteile verhindert werden. Der steife Schutzring ist bspw. aus Metall, insbesondere aus einem Stahlwerkstoff oder harten Aluminiumwerkstoff, gebildet.

Der Klebstoff kann während des Einschraubens der fließlochformenden Schraube, aufgrund der erzielten Pressung an der Füge- bzw. Einschraubstelle, quasi von unten, in das Vorloch eindringen und Hohlräume auffüllen und/oder den Schutzring innerhalb der Vorlochs verkleben. Dadurch wird einerseits die Abdichtung verbessert und andererseits die erzielbare Verbindungsfestigkeit gesteigert. Der durchgängig bzw. vollflächig aufgetragene Klebstoff zur Verklebung der Bauteile kann also im Rahmen der Erfindung auch zur Erzielung eines funktionalen Nutzens innerhalb des Vorlochs dienen. Wie bereits eingangs erläutert ist demgegenüber im Stand der Technik vorgesehen, dass die Füge- bzw. Einschraubstelle von einem Klebstoffauftrag ausgespart wird. Bevorzugt ist vorgesehen, dass beim Auftragen des Klebstoffs insgesamt oder nur lokal an der Einschraub- bzw. Fügestelle mehr Klebstoff aufgetragen wird, der dann beim Einschrauben der fließlochformenden Schraube, quasi von unten, in das Vorloch eindringen kann.

Eine erfindungsgemäße fließlochformende Schraube weist einen Schraubenkopf und einen daran angeformten Schraubenschaft, mit einem von der Schaftspitze ausgehenden Lochformungsabschnitt und einem sich in Richtung des Schraubenkopfs anschließenden selbstformenden Gewindeabschnitt, auf, wobei vorgesehen ist, dass auf dem Schraubenschaft ein verliersicher gehaltener Schutzring angeordnet ist. Die fließlochformende Schraube und der Schutzring sind demnach einteilig, d. h. als ein Teil, ausgebildet.

Der Schutzring ist im Übergangsbereich zwischen dem Lochformungsabschnitt und dem selbstformenden Gewindeabschnitt am Schraubenschaft angeordnet und wird insbesondere durch Klemmung bzw. mittels Klemmsitz und/oder durch Formschluss (bspw. mit den Gewindegängen des Gewindeabschnitts) am Schraubenschaft festgehalten. Je nach Festigkeit des Klemmsitzes und/oder des Formschlusses kann der Schraubenschaft in axialer Richtung durch den Schutzring hindurchgleiten oder mittels dem selbstformenden Gewindeabschnitt durch den Schutzring durchgeschraubt werden. In beiden Fällen ergibt sich während des Einschraubvorgangs eine axiale Relativbewegung zwischen der fließlochformenden Schraube bzw. deren Schraubenschaft und dem Schutzring, der sich hierbei am unteren Bauteil abstützt.

Der Schutzring kann aus Metall (bspw. Aluminium) oder aus Kunststoff (z. B. PA 4.6) gebildet sein. Der Schutzring kann auf den Schraubenschaft aufgesteckt oder aufgeschraubt sein. Ferner ist auch eine lösbare Fixierung, bspw. durch punktuelles Verkleben, möglich. Der Schutzring kann, insbesondere wenn dieser aus Kunststoff gebildet ist, auch auf den Schraubenschaft aufgespritzt sein.

Die Erfindung wird nachfolgend anhand von schematischen und nicht maßstabsgetreuen Figuren beispielhaft näher erläutert.
- Fig. 1: zeigt in drei Schnittdarstellungen einen erfindungsgemäßen Einschraubvorgang.
- Fig. 2: zeigt in einer Schnittdarstellung eine andere Ausführungsmöglichkeit einer erfindungsgemäß hergestellten Schraub-Klebverbindung.
- Fig. 3: zeigt in einer Schnittdarstellung eine weitere Ausführungsmöglichkeit einer erfindungsgemäß hergestellten Schraub-Klebverbindung.
- Fig. 4: zeigt in einer Schnittdarstellung eine weitere Ausführungsmöglichkeit einer erfindungsgemäß hergestellten Schraub-Klebverbindung.

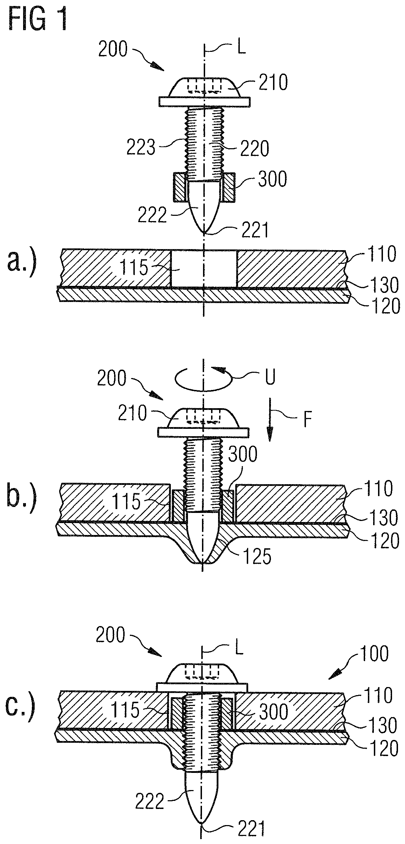

Fig. 1a zeigt ausschnittsweise zwei blechartige Bauteile 110 und 120, die an der dargestellten Fügestelle verklebt und mit Hilfe einer fließlochformenden Schraube 200 gefügt werden sollen. Das obere Bauteil 110 weist an der Fügestelle ein Vorloch 115 auf. Das obere Bauteil 110 kann aus Metall, bspw. einem Blech- oder Gussmaterial, oder auch aus einem faserverstärkten Kunststoff (FVK), wie insbesondere glasfaserverstärktem Kunststoff (GFK) oder kohlenstofffaserverstärktem Kunststoff (CFK) gebildet sein. Das untere Bauteil 120 ist aus einem zum Fließlochformen geeigneten Material, wie insbesondere einem Stahl- oder Aluminiumblech, gebildet. Zwischen den Bauteilen 110 und 120 befindet sich ein durchgängiger Klebstofffilm bzw. eine Klebstoffzwischenschicht 130.

Die fließlochformende Schraube 200 weist einen Schraubenkopf 210 und einen daran angeformten, sich in axialer Richtung L (Schraubenachse) erstreckenden Schraubenschaft 220 auf. Der Schraubenschaft 220 ist mit einem von der stumpfen bzw. verrundeten Schaft- bzw. Schraubenspitze 221 ausgehenden Lochformungsabschnitt 222 und einem sich in Richtung des Schraubenkopfs 210 anschließenden selbstformenden Gewindeabschnitt 223 ausgebildet. Der selbstformende Gewindeabschnitt 223 kann sich, wie gezeigt, bis zum Schraubenkopf 210 erstrecken. Ebenso kann der kopfnahe bzw. an den Schraubenkopf 210 angrenzende Schaftabschnitt ohne Gewinde bzw. gewindelos ausgebildet sein. Die fließlochformende Schraube 200 ist als solche aus dem Stand der Technik bekannt.

Am Schraubenschaft 220 ist im Übergangsbereich zwischen dem Lochformungsabschnitt 222 und dem selbstformenden Gewindeabschnitt 223 ein als solcher bezeichneter Schutzring 300 angeordnet, der durch Klemmung (wozu der Innendurchmesser des Schutzrings 300 kleiner ist als der Außendurchmesser des Schraubenschafts 220 an der betreffenden Stelle) oder Formschluss (bspw. durch leichten Gewindeeingriff) am Schraubenschaft 220 verliersicher festgehalten ist. Der Schutzring 300 weist in dem gezeigten Ausführungsbeispiel eine hülsenartige Gestalt auf und kann insofern auch als Schutzhülse bezeichnet werden. Der Schutzring 300 kann abweichend zu dem gezeigten rechteckigen Querschnitt auch mit anderen Querschnittsgeometrien ausgebildet sein und bspw. einen kreisförmigen, ovalen, dreieckigen Querschnitt oder dergleichen aufweisen.

Das Einschrauben der fließlochformenden Schraube 200 erfolgt (ohne Vorlochen des unteren Bauteils 120) in einer an und für sich aus dem Stand der Technik bekannten Weise. Zu Beginn des Einschraubvorgangs wird der Schraubenschaft 220 zusammen mit dem daran gehaltenen Schutzring 300 in das Vorloch 115 im oberen Bauteil 110 eingesteckt, so dass die Schraubenspitze 221 am unteren Bauteil 120 zur Anlage kommt. Die Schraube 200 wird dann mit einer Umdrehungszahl U beaufschlagt und mit einer Kraft F gegen das untere Bauteil 120 gedrückt, wodurch sich in bekannter Weise ein Fließloch 125 im unteren Bauteil 120 ausbildet, in das der selbstformende Gewindeabschnitt 223 der Schraube 200 eingeschraubt wird. Dies ist in Fig. 1b gezeigt. (Die Einschraubvorrichtung ist nicht dargestellt.)

Während des, insbesondere automatisiert ausgeführten, Einschraubvorgangs kann die axiale Druckkraft F und/oder die Umdrehungszahl U variiert und insbesondere geregelt werden. Auch eine Drehrichtungsumkehr kann vorgesehen sein. Ferner kann ein Niederhalter oder dergleichen zum Aufbringen einer Fixierkraft auf das obere Bauteil 110 verwendet werden.

Der im Vorloch 115 befindliche Schutzring 300 wird durch die in Kraftrichtung F in die Bauteile 110 und 120 eingetriebene Schraube 200 gegen das untere Bauteil 120 gedrückt und stützt sich hierbei am unteren Bauteil 120 ab. Gleichzeitig wird der Schutzring 300 vom Schraubenschaft 220 durchschraubt, wodurch es zu einer axialen Relativbewegung zwischen dem Schraubenschaft 220 und dem ortsfesten Schutzring 300 kommt, bei der sich der Schutzring 300 und der Schraubenkopf 210 annähern. Die Relativbewegung zwischen dem Schutzring 300 und dem Schraubenschaft 220 der fließlochformenden Schraube 200 erfolgt insbesondere derart, dass das Gewinde des Gewindeabschnitts 223 nicht in die Ringinnenwandung eingreift, sondern der Schraubenschaft 220 durch den Schutzring 300 hindurch geschoben wird und insbesondere hindurch gleitet.

Der Schutzring 300 verhindert während des Einschraubvorgangs das Aufsteigen von Klebstoff aus der durchgängigen Klebstoffschicht 130 durch das Vorloch 115 und/oder entlang des Gewindeabschnitts 223 der Schraube 200, indem der Klebstoff quasi am Schutzring 300 hängen bleibt. Dadurch wird eine Verschmutzung der Bauteile, insbesondere des oberen Bauteils 110, und/oder der Einschraubvorrichtung verhindert. Andererseits kann vorgesehen sein, dass der Klebstoff 130, aufgrund der erzielten Pressung an der Füge- bzw. Einschraubstelle, beim Einschraubvorgang gezielt in das Vorloch 115 eindringt, ohne jedoch aus dem Vorloch 115 auszutreten (d. h. der Klebstoff verbleibt im Vorloch 115), um bspw. Leerräume im Vorloch 115 aufzufüllen und/oder den Schutzring 300 innerhalb des Vorlochs 115 zu verkleben. Beim Einschrauben der Schraube 200 kann der Schutzring 300 auch als Zentrierhilfe innerhalb des Vorlochs 115 im oberen Bauteil 110 dienen, wobei auch die Innenwandung des Vorlochs 115 vor Beschädigungen durch den rotierenden Schraubenschaft 220 bzw. dem daran ausgebildeten Gewinde 223 geschützt ist.

Fig. 1c zeigt den Endzustand. Der hergestellte Bauteilverbund ist mit 100 bezeichnet. Der Schutzring 300 verbleibt dauerhaft im Vorloch 115. Die axiale Länge des Schutzrings 300 liegt unterhalb der Dicke des oberen Bauteils 110 und entspricht maximal bzw. höchstens der Dicke des oberen Bauteils 110.

In dem in Fig. 1 gezeigten Ausführungsbeispiel kann der Schraubenschaft 220 der fließlochformenden Schraube 200 einen Nenndurchmesser von 5,0 mm aufweisen. Das Vorloch 115 im oberen Bauteil 110 kann einen Durchmesser von 7,0 mm bis 8,0 mm aufweisen. Der Schutzring 300 kann einen Außendurchmesser von 6,0 mm bis 7,9 mm aufweisen, woraus sich für die Ringwandung des Schutzrings 300 eine bevorzugte gleichmäßige Wanddicke von ca. 0,5 mm bis ca. 1,5 mm ergibt.

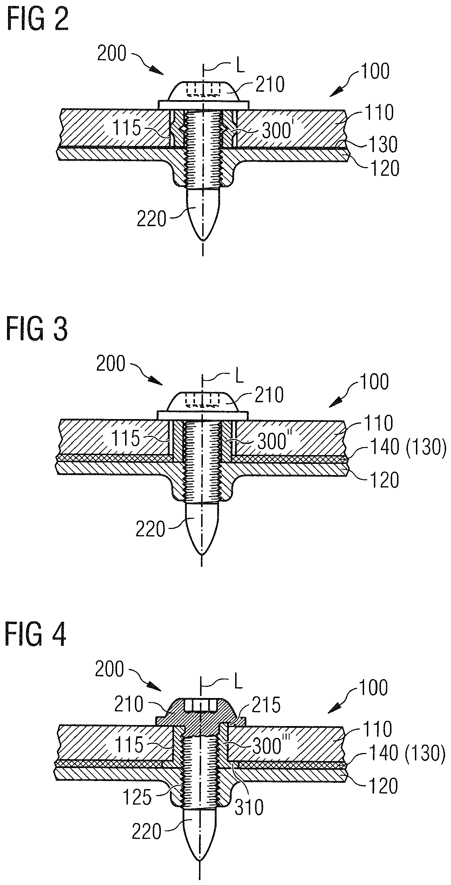

Fig. 2 zeigt eine andere Ausführungsmöglichkeit, bei welcher der verformbare Schutzring 300' bezüglich der Dicke des oberen Bauteils 110 mit axialer Überlänge ausgebildet ist, wodurch dieser beim Einschraubvorgang zwischen dem unteren Bauteil 120 und dem Schraubenkopf 210 gestaucht wird, so dass ein indirekter Formschluss zwischen dem Schraubenschaft 220 und dem Vorloch 115 im oberen Bauteil 110 herbeigeführt wird, wie dargestellt. Dadurch können Scherbelastungen zwischen den Bauteilen 110 und 120, insbesondere vor dem Aushärten des Klebstoffs 130, besser ertragen werden. Der Schutzring 300' ist aus einem verformbaren Material, wie bspw. Kunststoff, Kunststoffverbund oder Metall (insbesondere Aluminium) gebildet. Gegebenenfalls kann das Material des Schutzrings 300' auch zwischen die Bauteile 110 und 120 eindringen und einen Spalt ausbilden (siehe Fig. 4). Der Einschraubvorgang erfolgt analog zu den vorausgehenden Erläuterungen in Bezug auf die Fig. 1.

Fig. 3 zeigt eine weitere Ausführungsmöglichkeit, bei welcher der Schutzring 300" steif bzw. unverformbar und bezüglich der Dicke des oberen Bauteils 110 mit axialer Überlänge ausgebildet ist, wodurch sich beim Einschraubvorgang ein definierter Spalt 140 zwischen den Bauteilen 110 und 120 einstellt. Im Spalt 140 kann sich bspw. ein Klebstoff 130 befinden. Der nicht stauchbare Schutzring 300" verhindert einen Berührungskontakt der Bauteile 110 und 120 und unterbindet das Wegpressen des Klebstoffs 130 an der Fügestelle. Der Einschraubvorgang erfolgt analog zu den vorausgehenden Erläuterungen in Bezug auf die Fig. 1.

Fig. 4 zeigt eine weitere Ausführungsmöglichkeit, bei der der Schutzring 300'" an seinem vom Schraubenkopf 210 abgewandten Ende eine durch plastische Verformung herbeigeführte Fließwulst 310 aufweist, die die Bauteile 110 und 120 an der Einschraubstelle auseinander gedrückt hat, wodurch sich, analog zu der in Fig. 3 gezeigten Ausführungsmöglichkeit, ein Spalt 140 zwischen den Bauteilen 110 und 120 ausgebildet hat, der bevorzugt mit Klebstoff 130 gefüllt ist.

Der Einschraubvorgang erfolgt im Wesentlichen analog zu den vorausgehenden Erläuterungen in Bezug auf die Fig. 1. Beim Einschraubvorgang wird der bezüglich der Dicke des oberen Bauteils 110 mit axialer Überlänge ausgebildete hülsenartige Schutzring 300'" gestaucht, wie im Zusammenhang mit dem Ausführungsbeispiel der Fig. 2 erläutert. Ferner wird das untere Bauteil 120 durch die fließlochformende Schraube 200 nach unten gedrückt bzw. vom oberen Bauteil 110 weg gedrückt, so dass sich der Spalt 140 zwischen den Bauteilen 110 und 120 ausbildet, in den das Ringmaterial hineinfließen kann, was die Beabstandung der Bauteile 110 und 120 begünstigt, wobei die sich ausbildende Fließwulst 310 im Weiteren auch als Abstandshalter fungiert. Der Schutzring 300'" kann hierzu an seinem vom Schraubenkopf 210 abgewandten bzw. dem unteren Bauteil 120 zugewandten Ende spezielle Ausgestaltungsmerkmale (bspw. weicheres Material, geringere Ringwandungsdicke, Einprägungen oder Schlitze in der Ringwandung und/oder dergleichen) aufweisen.

Bevorzugt ist der Schutzring 300'" aus einem verformbaren Material gebildet. Ferner kann vorgesehen sein, dass der hülsenartig ausgebildete Schutzring 300'" im Wesentlichen steif, d. h. unverformbar, ausgebildet ist, wie im Zusammenhang mit dem Ausführungsbeispiel der Fig. 3 erläutert, und nur an seinem vom Schraubenkopf 210 abgewandten Ende verformbar ist.

In Fig. 4 sind ferner zwei bevorzugte Ausgestaltungen des Schraubenkopfs 210 dargestellt, nämlich mit Unterkopfnut 215 (rechte Schraubenkopfseite), für die Aufnahme von Ringmaterial zur Vermeidung eines Unterkopfspalts, und ohne Unterkopfnut (linke Schraubenkopfseite).

Die Merkmale der vorausgehend erläuterten und in den Figuren gezeigten Ausführungsmöglichkeiten sind im Rahmen der Erfindung zu weiteren erfindungsgemäßen Ausführungsmöglichkeiten kombinierbar.

### Bezugszeichenliste

### Verfahren zum Herstellen einer Schraub-Klebverbindung unter Verwendung einer fließlochformenden Schraube, sowie hierfür verwendbare fließlochformende Schraube

- 100: Bauteilverbund
- 110: oberes Bauteil
- 115: Vorloch
- 120: unteres Bauteil
- 125: Fließloch
- 130: Klebstoff, Klebstoffschicht
- 140: Spalt
- 200: fließlochformende Schraube
- 210: Schraubenkopf
- 215: Unterkopfnut
- 220: Schraubenschaft
- 221: Schraubenspitze
- 222: fließlochformender Abschnitt, Lochformungsabschnitt
- 223: selbstformender Gewindeabschnitt
- 300: Schutzring
- 310: Fließwulst
- F: axiale Druckkraft
- L: Längsachse, Schraubenachse
- U: Umdrehungszahl

## Patentansprüche

1. Verfahren zum Herstellen einer Schraub-Klebverbindung zwischen wenigstens einem oberen Bauteil (110) und wenigstens einem unteren Bauteil (120) unter Verwendung einer fließlochformenden Schraube (200), wobei die Schraube (200) an der Fügestelle das obere Bauteil (110) durch ein Vorloch (115) durchdringt und mit dem unteren Bauteil (120) unter Ausbildung eines Fließlochs (125) verschraubt wird,
**dadurch gekennzeichnet, dass**
im Vorloch (115) des oberen Bauteils (110) ein Schutzring (300) platziert wird, durch den der Schraubenschaft (220) der fließlochformenden Schraube (200) beim Einschraubvorgang hindurch geschraubt wird.

2. Verfahren nach Anspruch 1,
**dadurch gekennzeichnet, dass**
der Schutzring (300) am Schraubenschaft (220) befestigt und zusammen mit diesem in das Vorloch (115) im oberen Bauteil (110) eingesteckt wird.

3. Verfahren nach Anspruch 1 oder 2,
**dadurch gekennzeichnet, dass**
die axiale Länge des Schutzrings (300) höchstens der Dicke des oberen Bauteils (110) entspricht.

4. Verfahren nach Anspruch 1 oder 2,
**dadurch gekennzeichnet, dass**
der Schutzring (300') verformbar und in axialer Richtung bezüglich der Dicke des oberen Bauteils (110) mit Überlänge ausgebildet ist, wodurch dieser beim Einschraubvorgang zwischen dem unteren Bauteil (120) und dem Schraubenkopf (210) der fließlochformenden Schraube (200) gestaucht wird.

5. Verfahren nach Anspruch 1 oder 2,
**dadurch gekennzeichnet, dass**
der Schutzring (300") steif und in axialer Richtung bezüglich der Dicke des oberen Bauteils (110) mit Überlänge ausgebildet ist, wodurch sich beim Einschraubvorgang ein definierter Spalt (140) zwischen den Bauteilen (110, 120) ausbildet.

6. Verfahren nach einem der vorausgehenden Ansprüche,
**dadurch gekennzeichnet, dass**
insgesamt oder nur lokal an der Fügestelle mehr Klebstoff (130) aufgetragen wird, der gezielt in das Vorloch (115) eindringt und den Schutzring (300) innerhalb des Vorlochs (115) verklebt.

7. Fließlochformende Schraube (200), insbesondere zur Verwendung in einem Verfahren gemäß einem der vorausgehenden Ansprüche, mit einem Schraubenkopf (210) und einem daran angeformten Schraubenschaft (220), der einen von der Schaftspitze (221) ausgehenden Lochformungsabschnitt (222) und einen sich in Richtung des Schraubenkopfs (210) anschließenden selbstformenden Gewindeabschnitt (223) aufweist,
**dadurch gekennzeichnet, dass**
auf dem Schraubenschaft (220) wenigstens ein verliersicher gehaltener Schutzring (300) angeordnet ist, wobei der Schutzring (300) in einem Übergangsbereich zwischen dem Lochformungsabschnitt (222) und dem selbstformenden Gewindeabschnitt (223) angeordnet ist.

8. Fließlochformende Schraube (200) nach Anspruch 7,
**dadurch gekennzeichnet, dass**
der Schutzring (300) durch Klemmung festgehalten wird.

9. Fließlochformende Schraube (200) nach Anspruch 7 oder 8,
**dadurch gekennzeichnet, dass**
der Schutzring (300) aus Metall oder aus Kunststoff gebildet ist.

## Claims

1. A method for producing a screw-and-adhesive connection between at least one upper component (110) and at least one lower component (120) using a flow drill screw (200), wherein the screw (200) penetrates the upper component (110) at the joining point through a pilot hole (115) and is screwed to the lower component (120), forming a flow-drilled hole (125),
**characterised in that**
a protective ring (300) is placed in the pilot hole (115) of the upper component (110), through which ring the screw shank (220) of the flow drill screw (200) is screwed in the screwing-in operation.

2. A method according to Claim 1,
**characterised in that**
the protective ring (300) is fastened to the screw shank (220) and together therewith is inserted into the pilot hole (115) in the upper component (110).

3. A method according to Claim 1 or Claim 2,
**characterised in that**
the axial length of the protective ring (300) corresponds to at most the thickness of the upper component (110).

4. A method according to Claim 1 or Claim 2,
**characterised in that**
the protective ring (300') is designed to be deformable and with an excessive length in the axial direction with respect to the thickness of the upper component (110), as a result of which said ring in the screwing-in operation is compressed between the lower component (120) and the screw head (210) of the flow drill screw (200).

5. A method according to Claim 1 or Claim 2,
**characterised in that**
the protective ring (300") is designed to be rigid and with an excessive length in the axial direction with respect to the thickness of the upper component (110), as a result of which a defined gap (140) is formed between the components (110, 120) in the screwing-in operation.

6. A method according to one of the preceding claims,
**characterised in that**
as a whole or only locally at the joining point more adhesive (130) is applied, which penetrates in targeted manner into the pilot hole (115) and glues the protective ring (300) within the pilot hole (115).

7. A flow drill screw (200), especially for use in a method according to one of the preceding claims, with a screw head (210) and a screw shank (220) formed thereon, which has a hole-forming portion (222) starting from the shank tip (221) and a self-forming threaded portion (223) adjoining in the direction of the screw head (210),
**characterised in that**
at least one protective ring (300) held in captive manner is arranged on the screw shank (220), the protective ring (300) being arranged in a transition region between the hole-forming portion (222) and the self-forming threaded portion (223).

8. A flow drill screw (200) according to Claim 7,
**characterised in that**
the protective ring (300) is secured by clamping.

9. A flow drill screw (200) according to Claim 7 or 8,
**characterised in that**
the protective ring (300) is formed from metal or from plastics material.

## Revendications

1. Procédé d'obtention d'une liaison par collage et vissage entre au moins une pièce supérieure (110) et au moins une pièce inférieure (120) en utilisant une vis formant des perçages par fluage (200), la vis (200) traversant la pièce supérieure (110) au niveau de l'emplacement de jointure au travers d'un perçage préalable (115) et étant vissée avec la pièce inférieure (120) en formant un perçage par fluage (125),
**caractérisé en ce que**
dans le perçage préalable (115) de la pièce supérieure (110) est positionnée une bague de protection (300) au travers de laquelle la tige (220) de la vis formant des perçages par fluage (200) est vissée lors du processus de vissage.

2. Procédé conforme à la revendication 1,
**caractérisé en ce que**
la bague de protection (300) est fixée sur la tige (220) de la vis et est enfichée avec celle-ci dans le perçage préalable (115) de la pièce supérieure (110).

3. Procédé conforme à la revendication 1 ou 2,
**caractérisé en ce que**
la longueur axiale de la bague de protection (300) correspond au maximum à l'épaisseur de la pièce supérieure (110).

4. Procédé conforme à la revendication 1 ou 2,
**caractérisé en ce que**
la bague de protection (300') est déformable et est réalisée avec un surplus de longueur en direction axiale par rapport à l'épaisseur de la pièce supérieure (110) de sorte que, lors du processus de vissage, celle-ci soit refoulée entre la pièce inférieure (120) et la tête (210) de la vis formant des perçages par fluage (200).

5. Procédé conforme à la revendication 1 ou 2,
**caractérisé en ce que**
la bague de protection (300") est rigide et est réalisée avec un surplus de longueur en direction axiale par rapport à l'épaisseur de la pièce supérieure (110) de façon à former lors du processus de vissage un intervalle (140) défini entre les pièces (110,120).

6. Procédé conforme à l'une des revendications précédentes,
**caractérisé en ce que**
globalement ou uniquement localement au niveau de l'emplacement de jointure une plus grande quantité de colle (130) est appliquée, pénètre de façon appropriée dans le perçage préalable (115) et colle la bague de protection (300) à la partie interne de ce perçage préalable (115).

7. Vis de formation de perçages par fluage (200) en particulier destinée à être utilisée lors de la mise en oeuvre d'un procédé conforme à l'une des revendications précédentes,
comprenant une tête de vis (210) et une tige de vis (220) formée sur celle-ci, qui comporte un segment de formation de perçages partant de la pointe (221) de la tige (222) et un segment fileté auto-taraudant (223) s'y raccordant en direction de la tête de vis (210),
**caractérisé en ce que**
sur la tige de la vis (220) est montée au moins une bague de protection (300) maintenue de façon imperdable, la bague de protection (300) étant positionnée dans la zone de transition entre le segment de formation de perçage (222) et le segment fileté à auto-taraudant (223).

8. Vis de formation de perçages par fluages (200) conforme à la revendication 7,
**caractérisé en ce que**
la bague de protection (300) est maintenue par serrage.

9. Vis de formation de perçages par fluage (200) conforme à la revendication 7 ou 8,
**caractérisé en ce que**
la bague de protection (300) est réalisée en métal ou en matériau synthétique.
